# EUROPEAN PATENT APPLICATION

(11) **EP 2 191 750 A2**
(43) Date of publication of application: **02.06.2010**
(21) Application number: 09174316.1
(22) Date of filing: 28.10.2009
(51) Int. Cl.: A47J 19/06, B02C 18/18, B26D 3/26

(54) **Garlic press**

(30) Priority: 03.11.2008 NL 2002162
(71) Applicant: Mepal B.V., 7241 MB Lochem (NL)
(72) Inventor: Weernink, Johannes Hermanus, 7478BL, Diepenheim (NL); Van Paesschen, Daniël Efraim, 6828AJ, Arnhem (NL)
(74) Representative: Mink-Lindenburg, Charlotte Hildegard

(57) **Abstract**

The invention relates to a device for pressing and/or cutting fresh herbs or spices such as garlic. The device comprises a housing which is provided with a hollow space for receiving the fresh herbs or spices, such as cloves of garlic, and with cutting means arranged adjacently of the space. The device is further provided with a pushing member which is arranged movably in the housing and which is adapted to push the herbs or spices through the cutting means. According to the invention the pushing member is movable by a user exerting a striking or pushing movement on the device.

## Description

The invention relates to a device for pressing and/or cutting fresh herbs or spices such as garlic, wherein the device comprises a housing which is provided with a hollow space for receiving the fresh herbs or spices, such as cloves of garlic, and with cutting means arranged adjacently of the space, wherein the device is further provided with a pushing member which is arranged movably in the housing and which is adapted to push the herbs or spices through the cutting means.

Such a device is known in practice under the name of garlic press. Known for instance is a garlic press with a squeeze operation. The known garlic press has to be held in the hand and squeezed together. This requires a considerable force.

A version is also known with a rotation movement. Reference is made to the American patents US 5947016 and US 6401605.

The known devices in the above stated American patents are referred to as garlic cutters. Cutting takes place by rotating a housing part relative to the housing, wherein the housing part is provided with a pushing member which pushes the cloves of garlic through a cutting grid. The known devices have the drawback of comprising many components, whereby production is complex and relatively expensive.

The invention has for its object to provide a device of the type stated in the preamble which obviates the above stated drawbacks. The device according to the invention has for this purpose the feature that the pushing member is movable by a user exerting a striking or pushing movement on the device.

In a first preferred embodiment the device according to the invention comprises a housing part on which the pushing member is arranged, and the hollow space is adapted to guide the housing part.

Operation of the device according to the invention is very light: a light striking or pushing movement is sufficient. The device according to the invention is thereby suitable for use by all users, both young and old. Owing to the choice of a striking or pushing movement the device according to the invention can moreover be assembled from few components, whereby production is simple and relatively inexpensive.

In a practical embodiment the housing part is provided with a striking surface. Through integration of the striking surface in the housing part additional operating means become unnecessary, this further contributing toward simple and inexpensive production.

In a further preferred embodiment the housing part is accommodated releasably in the housing, whereby the device according to the invention is easy to clean.

The cutting means preferably comprise a knife grid and the pushing member is provided with pins which are adapted for co-action with the holes in the knife grid.

In a hygienic preferred embodiment the device according to the invention is provided with means for cleaning the pins of the pushing member. The cleaning means preferably comprise a cleaning grid arranged movably round the pins. Operation of the grid can take a manual or automatic form.

The invention will now be described in more detail with reference to the following figures.
Figure 1 is a schematic side view of a garlic press according to the invention;
Figure 2 shows a section through the garlic press of figure 1;
Figure 3 shows an exploded sectional view of the garlic press of figure 1;
Figure 4A shows a detail of figure 2;
Figure 4B shows the detail of figure 4A in a second position;
Figure 5 shows a section through an alternative embodiment of the garlic press;
Figure 6 shows an exploded view of the view of figure 5;
Figure 7A shows a detail of figure 5;
Figure 7B shows the detail of figure 7A in a second position.

The same components in the figures provided with the same reference numerals.

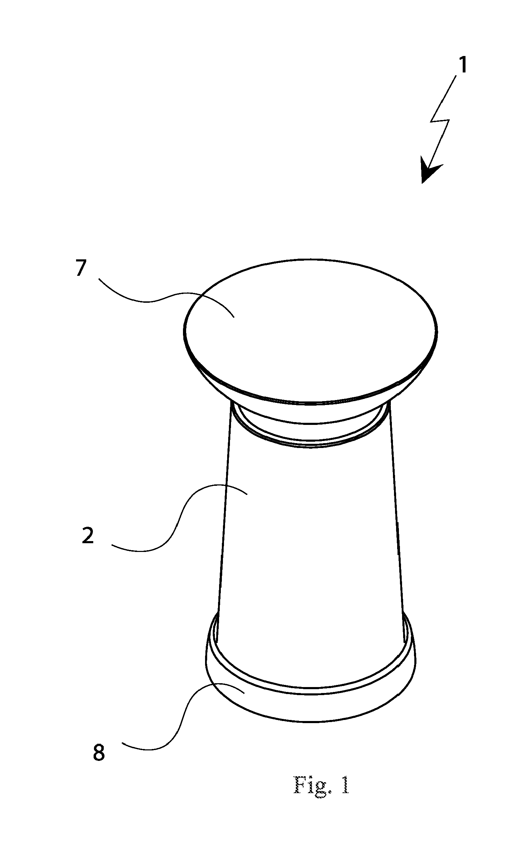

Figure 1 shows a schematic view of the exterior of a device 1 for pressing and/or cutting fresh herbs or spices. In the shown preferred embodiments the device 1 is embodied as a garlic press.

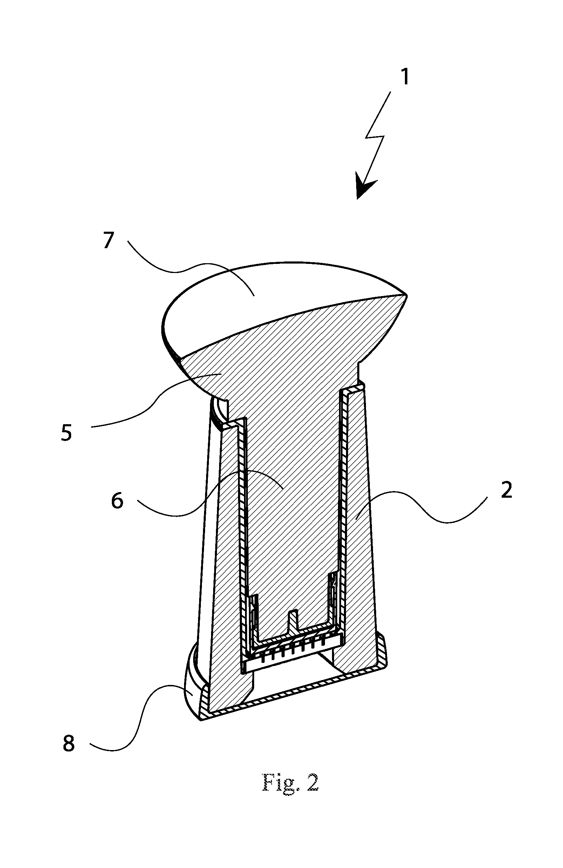

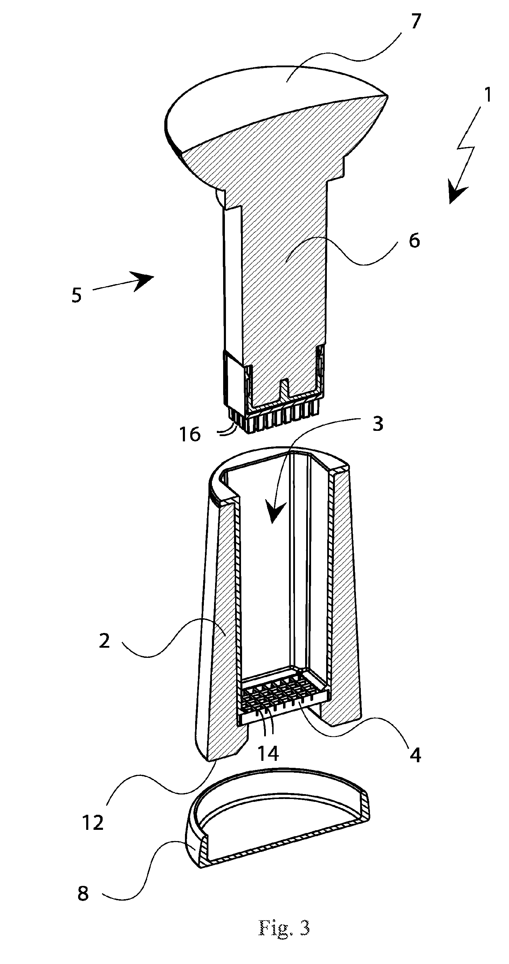

Figure 2 shows a sectional view of a first preferred embodiment of garlic press 1. Figure 3 shows an exploded sectional view of garlic press 1. Garlic press 1 comprises a housing 2 which is provided with a hollow space 3 for receiving the cloves of garlic. Hollow space 3 extends in lengthwise direction of housing 2. At the bottom of hollow space 3 the housing 2 is provided with cutting means in the form of a knife grid 4.

Garlic press 1 further comprises a housing part 5 accommodated releasably in housing 2. Housing part 5 is provided with a pushing member 6 extending in axial/longitudinal direction of the housing part. Situated on the end of the pushing member are pins 16 adapted for co-action with knife grid 4, which is provided for this purpose with holes 14.

Housing part 5 is provided on the opposite outer end with a striking surface 7.

Housing part 5 is received for guiding in axial direction in housing 2. This guiding can be realized in different ways. In the shown embodiment pushing member 6 is received form-fittingly in hollow space 3. With a suitable choice of plastic material no additional measures are necessary for the purpose of realizing the guiding.

Garlic press 1 is easy to use. The cloves of garlic must be placed in hollow space 3 on top of knife grid 4. Pushing member 5 is then placed in hollow space 3. Pins 16 rest here on the cloves of garlic. Operation takes place by performing a light striking or pushing movement on surface 7. As a result the pins 16 push the cloves of garlic through holes 14 of knife grid 4. The resulting cut strips of garlic can be collected in reservoir 8. Reservoir 8 has an upright edge and dimensions such that housing 2 can be placed inside the upright edge. Housing 2 is provided on the underside for this purpose with a surface 12 on which it can stand. Garlic press 1 can of course also be placed on another surface, such as a chopping board. The length of pins 16 is chosen such that the cut garlic strips are subsequently crushed and pressed out between pins 16 and the surface, i.e. the base of reservoir 8 or the chopping board. An optimum distribution of the garlic in a dish can be achieved as a result of this further reduction in size. Owing to the use of the reservoir, the juice pressed out of the cloves of garlic can also be included in a dish. Alternatively, garlic press 1 can also be used without reservoir or chopping board, for instance by holding the garlic press above a pan.

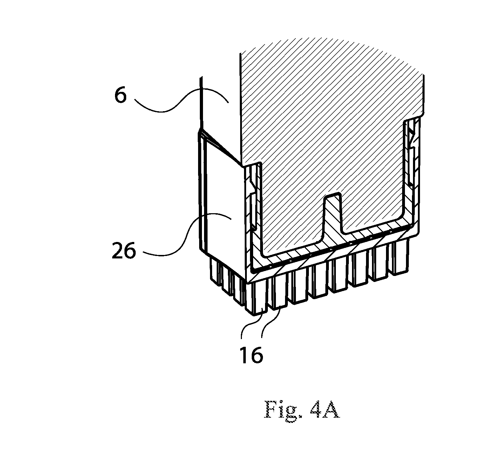

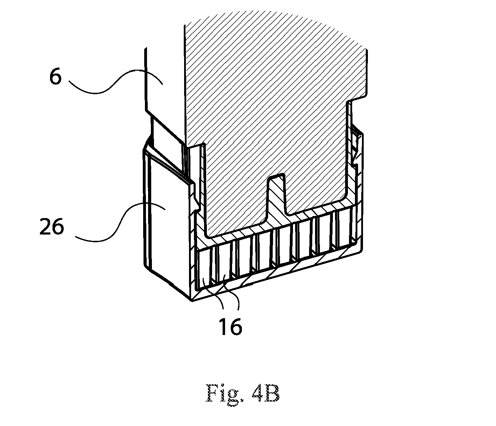

Garlic press 1 is further provided with means for cleaning the pushing member. The cleaning means comprise a cleaning grid 26 arranged movably round pins 60. In the shown preferred embodiment the cleaning grid 26 is arranged form-fittingly round the outer end of the pushing member and slidable in longitudinal direction of pushing member 6. This is illustrated on the basis of Figures 4A and 4B. Figure 4A shows cleaning grid 26 in the upper position. This is the position of use of garlic press 1 in which the cloves of garlic can be pressed. Figure 4B shows cleaning raster 26 in the lower position, this being the cleaning position in which cleaning grid 26 is pushed along pins 16, and these are cleaned after use. The movement between the position of use and the cleaning position takes place by sliding the cleaning grid in axial direction of pushing member 6. In the first preferred embodiment cleaning takes place manually.

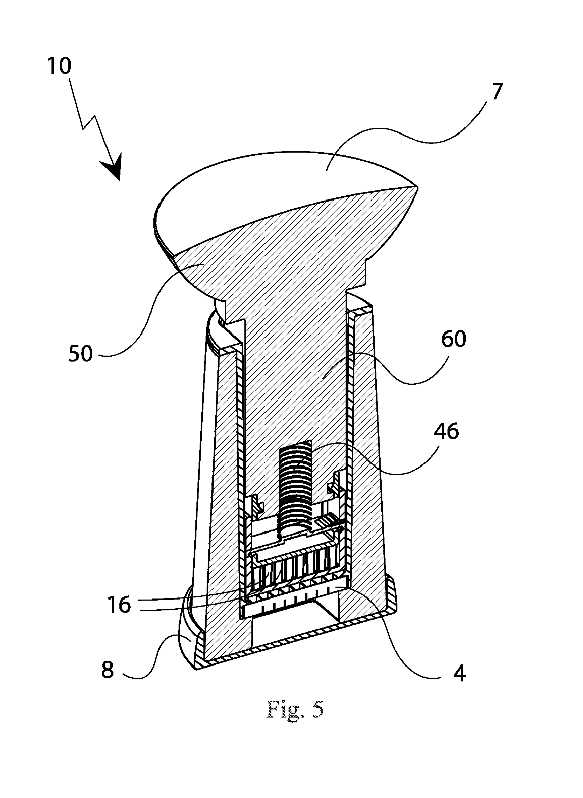

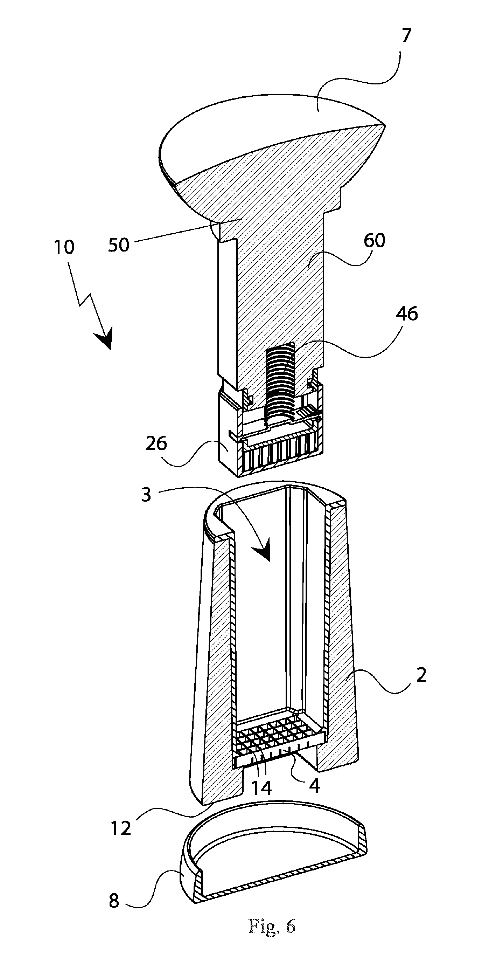

Figures 5 to 7B relate to an alternative preferred embodiment 10. The alternative preferred embodiment is largely similar to the above described first preferred embodiment. The corresponding components are designated with corresponding reference numerals.

The alternative preferred embodiment is distinguished from the first preferred embodiment by the manner of operating cleaning grid 26. In the above described first preferred embodiment this operation takes place manually, while the alternative second preferred embodiment has automatic operation of the cleaning grid. Housing part 50 and pushing member 60 are embodied differently for this purpose.

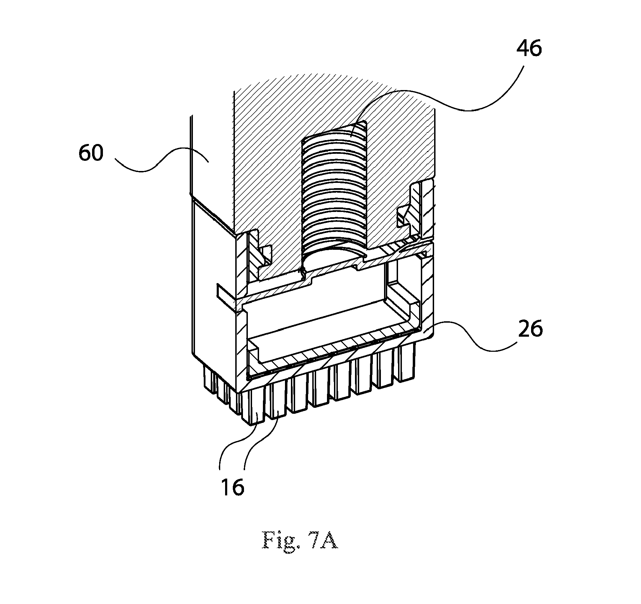

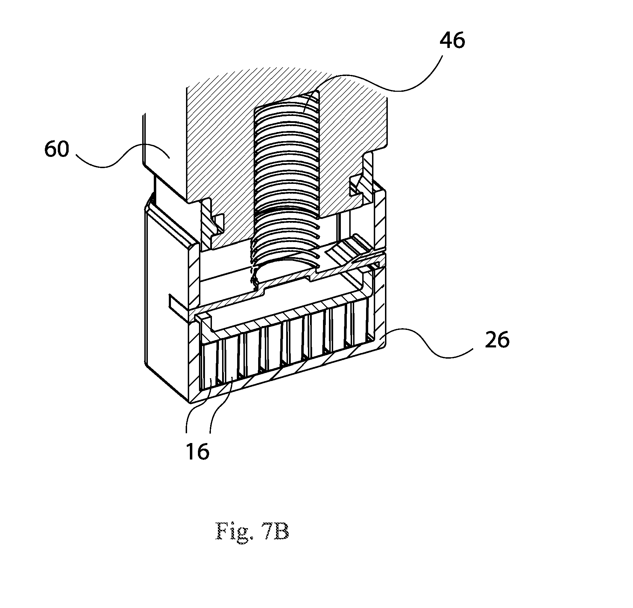

Pushing member 60 is provided for this purpose with a spring 46 which biases cleaning grid 26 in the cleaning position as shown in Figure 7B. During use the pins 16 will be moved through holes 14 of knife grid 4, as a result of which cleaning grid 26 is urged into the position of use as shown in Figure 7A. Immediately after pushing member 60 is removed from knife grid 4, spring 46 forces cleaning grid 26 back into the cleaning position. In this alternative preferred embodiment an automatic cleaning is effected in elegant manner.

The invention is expressly not limited to the preferred embodiments described above in Figures 1 to 7B, but extends to all embodiments falling within the protection of the appended claims.

## Claims

1. Device for pressing and/or cutting fresh herbs or spices such as garlic, wherein the device comprises a housing which is provided with a hollow space for receiving the fresh herbs or spices, such as cloves of garlic, and with cutting means arranged adjacently of the space, wherein the device is further provided with a pushing member which is arranged movably in the housing and which is adapted to push the herbs or spices through the cutting means, **characterized in that** the pushing member is movable by a user exerting a striking or pushing movement on the device.

2. Device as claimed in claim 1, wherein the device comprises a housing part on which the pushing member is arranged, and wherein the hollow space is adapted to guide the housing part.

3. Device as claimed in claim 1 or 2, wherein the housing part is provided with a striking surface.

4. Device as claimed in claim 1, 2 or 3, wherein the housing part is accommodated releasably in the housing.

5. Device as claimed in any of the foregoing claims, wherein the cutting means comprise a knife grid.

6. Device as claimed in claim 5, wherein the pushing member is provided with pins which are adapted for co-action with the holes in the knife grid.

7. Device as claimed in claim 6, wherein the device is provided with means for cleaning the pins of the pushing member.

8. Device as claimed in claim 7, wherein the cleaning means comprise a cleaning grid arranged movably round the pins.

9. Device as claimed in claim 8, wherein the cleaning grid is movable by hand.

10. Device as claimed in claim 8, wherein the cleaning grid is movable by the striking or pushing movement.
